# EUROPEAN PATENT APPLICATION

(11) **EP 4 760 838 A1**
(43) Date of publication of application: **17.06.2026**
(21) Application number: 25222206.2
(22) Date of filing: 10.12.2025
(51) Int. Cl.: H01M 10/04, H01M 4/00, H01M 10/052, H01M 10/0562, H01M 10/0585, H01M 50/178

(54) **APPARATUS AND METHOD FOR MANUFACTURING SOLID-STATE BATTERY**

(30) Priority: 11.12.2024 TW 113148217
(71) Applicant: Hon Hai Precision Industry Co., Ltd., New Taipei City 236038 (TW); SolidEdge Solution Inc., Hsinchu City 300094 (TW)
(72) Inventor: LIU, Chien-Hung, 300094 Hsinchu City (TW); CHANG, Chih-Ching, 300094 Hsinchu City (TW); CHANG, Tseng-Lung, 300094 Hsinchu City (TW)
(74) Representative: Mewburn Ellis LLP

(57) **Abstract**

An apparatus for manufacturing solid-state battery, the apparatus includes a clamping platform, a shaping unit, and a side-package unit. The clamping platform includes a bottom base and a top base. The shaping unit includes a lower shaping mechanism and an upper shaping mechanism. The upper shaping mechanism is disposed surrounding the top base and includes a trimming component having trimming plates. The trimming plates are wedge plates with taper. The lower shaping mechanism is disposed surrounding the bottom base and includes a fixing component having fixing plates. The fixing plates are wedge plates with taper. The inner dimension of the fixing component is greater than the inner dimension of the trimming component. The side-package unit includes taping clamps disposed laterally surrounding the shaping unit.

## Description

### BACKGROUND

### Field of Invention

The present disclosure relates to an apparatus and method for manufacturing solid-state battery.

### Description of Related Art

Recently, the solid-state battery industry develops rapidly, especially in the solid-state battery industry utilized in the electric vehicle field. Generally, a foundation structure of the solid-state battery includes a cell that is wrapped by an exterior package. The cell includes cathode sheets, anode sheets, and electrolyte filled between the cathode sheets and the anode sheets. The cathode sheets and anode sheets each includes an electrode tab exposed by the exterior package. The electrode tabs of the cathode sheets and the anode sheets are further connected to the electrode lead as an electric connector for charging/discharging.

The pre-formed cathode sheets, anode sheets, and electrolyte films are stacked alternately and are packaged to become the cell of the solid-state battery. However, it is difficult to precisely dispose the cathode sheets, anode sheets, and electrolyte films without surface mounting process, and the electrolyte films may be wrinkled during the fabrication. The lithium may be precipitated during charging/discharging the solid-state battery, and lithium dendrites are generated, which may lead to unwanted safety incident.

Therefore, there is a need for a reliable apparatus for manufacturing solid-state battery.

### SUMMARY

An aspect of the disclosure provides an apparatus for manufacturing solid-state battery. The apparatus includes a clamping platform, a shaping unit, and a side-package unit. The clamping platform includes a bottom base and a top base. The shaping unit includes a lower shaping mechanism and an upper shaping mechanism. The upper shaping mechanism is disposed surrounding the top base and includes a trimming component having trimming plates. The trimming plates are wedge plates with taper. The lower shaping mechanism is disposed surrounding the bottom base and includes a fixing component having fixing plates. The fixing plates are wedge plates with taper. The inner dimension of the fixing component is greater than the inner dimension of the trimming component. The side-package unit includes taping clamps disposed laterally surrounding the shaping unit.

Another aspect of the disclosure provides a method of packing a solid-state battery, including providing a cell stack having a plurality of cathode sheets, a plurality of anode sheets, and a plurality of composite solid-state electrolyte films; securing the cell stack in the clamping platform of the apparatus for manufacturing solid-state battery; lifting up the lower shaping mechanism to fix a plurality of peripheral portions of the composite solid-state electrolyte films; pressing down the upper shaping mechanism to trim the peripheral portions of the composite solid-state electrolyte films; and adhering a plurality of tapes on sides of the cell stack, after the peripheral portions of the composite solid-state electrolyte films are trimmed and fixed.

According to the embodiments of the disclosure, the apparatus for manufacturing the solid-state battery can be reliable and efficiently package the cell stack as the battery, and the folded peripheral portions of the composite solid-state electrolyte films is thickened to improve the protection ability of the cell stack, thereby enhancing the battery safety of using the solid-state battery.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
Fig. 1 is an explosion diagram of a cell stack utilized in an apparatus for manufacturing a solid-state battery according to some embodiments of the disclosure.
Fig. 2 and Fig. 3 are an oblique view and an explosion view of the apparatus for manufacturing the solid-state battery according to some embodiments of the disclosure, respectively.
Fig. 4 is an oblique view of a manufacturing stage of the apparatus for manufacturing the solid-state battery according to some embodiments of the disclosure.
Fig. 5, Fig. 6, and Fig. 7 respectively are an oblique view, a cross-sectional view, and a partial view of another manufacturing stage of the apparatus for manufacturing the solid-state battery according to some embodiments of the disclosure.
Fig. 8 is an oblique view of another manufacturing stage of the apparatus for manufacturing the solid-state battery according to some embodiments of the disclosure.
Fig. 9 is an oblique view of another manufacturing stage of the apparatus for manufacturing the solid-state battery according to some embodiments of the disclosure.
Fig. 10 is an oblique view of the cell stack after being packaged by the apparatus for manufacturing the solid-state battery according to some embodiments of the disclosure.

### DESCRIPTION OF THE EMBODIMENTS

Reference will now be made in detail to the present embodiments of the disclosure, examples of which are illustrated in the accompanying drawings. Wherever possible, the same reference numbers are used in the drawings and the description to refer to the same or like parts.

Further, spatially relative terms, such as "on," "over," "under," "between" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

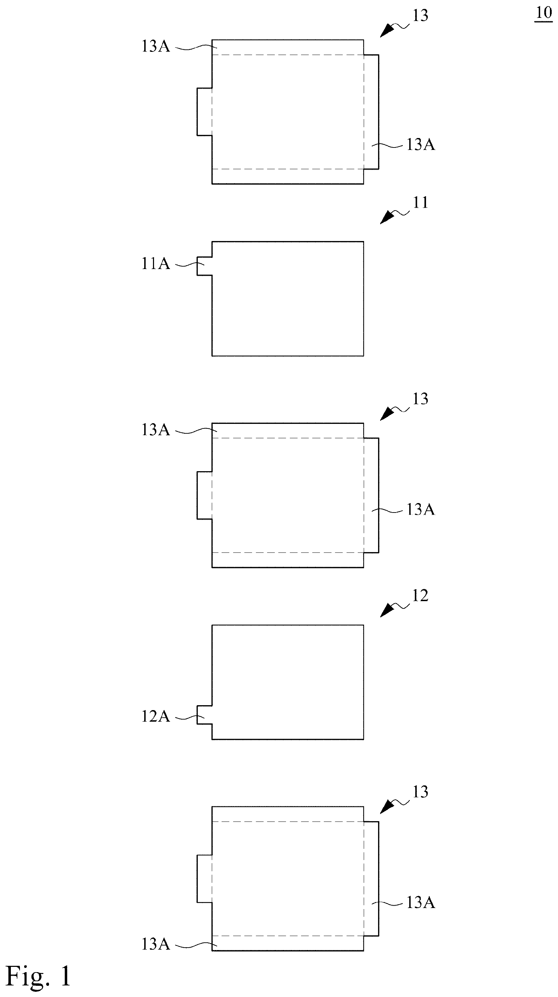

Reference is made to Fig. 1, which is an explosion diagram of a cell stack of utilized in an apparatus for manufacturing a solid-state battery according to some embodiments of the disclosure. In some embodiments, the cell stack 10 includes cathode sheets 11, anode sheets 12, and composite solid-state electrolyte films 13. The cathode sheets 11 and the anode sheets 12 are alternately laminated, and the composite solid-state electrolyte films 13 are interposed between the cathode sheets 11 and the anode sheets 12 to prevent the cathode sheets 11 from directly touching the anode sheets 12. According to the design requirements, the number and/or the density of the cathode sheets 11, the anode sheets 12, and the composite solid-state electrolyte films 13 can be varied. The number and density in the drawing is merely for example.

In some embodiments, each of the cathode sheets 11 includes a cathode current collector and a cathode active material layer coated on a main surface of the cathode current collector. The cathode current collector can be metal foil such as aluminum foil, stainless-steel foil, etc. The cathode active material layer includes cathode active materials, such as layered-structured lithium transition metal oxides, spinel-structured lithium transition metal oxides, or olivine-structured lithium transition metal oxides. For example, the cathode active materials can be olivine-structured lithium iron phosphate, layered-structured lithium cobalt oxide, spinel-structured lithium permanganate, lithium nickel manganese oxide, lithium nickel manganese cobalt oxide, or the like. In some embodiments, the cathode active materials can be coated and dried on the main surface of the cathode current collector. Each of the cathode sheets 11 includes a cathode electrode tab 11A extended from the cathode current collector.

In some embodiments, each of the anode sheets 12 includes an anode current collector and an anode active material layer coated on a main surface of the anode current collector. The anode active material layer includes anode active materials such as carbon including graphite, or other non-carbon materials. Each of the anode sheet 12 further includes an anode electrode tab 12A laterally extended from the anode current collector. The anode electrode tab 12A and the cathode electrode tab 11A are arranged at the same side of the cell stack 10. The anode electrode tab 12A and the cathode electrode tab 11A are spaced by a distance and are not overlapped in a vertical projection direction.

In some embodiments, each of the composite solid-state electrolyte films 13 is a pre-formed sheet structure. The composite solid-state electrolyte films 13 can be placed between the cathode sheets 11 and the anode sheets 12. In some embodiments, each of the composite solid-state electrolyte films 13 is a composite film including polymer and inorganic solid-state electrolyte, in which the polymer can be polyvinylidene fluoride, poly methyl methacrylate, polyethylene oxide, or the like, and the inorganic solid-state electrolyte can be lithium lanthanum zirconium oxide, lithium lanthanum titanium oxide, or the like. Therefore, the composite solid-state electrolyte films 13 have binding characteristic while being heated (Tm> temperature>Tg), and the composite solid-state electrolyte films 13 including polymer have thermoplastic characteristic can become flexible and suitable for oversize adhesion while being heated. Therefore, the cathode sheets 11, the anode sheets 12, and the composite solid-state electrolyte films 13 can be well attached and have good film support ability, and the cell stack 10 is set after being cooled, which is benefit for following manufacturing processes.

In some embodiments, the cathode sheets 11, the anode sheets 12, and the composite solid-state electrolyte films 13 are individual sheet structures, and the cell stack 10 includes individual cathode sheets 11, anode sheets 12, and composite solid-state electrolyte films 13. In some other embodiments, the composite solid-state electrolyte films 13 can be pre-pressed with the cathode sheets 11 or the anode sheets 12 as composite sheet structures, and the cell stack 10 includes composite sheet structures each including cathode sheet 11 and composite solid-state electrolyte film 13 and composite sheet structures each including anode sheet 12 and composite solid-state electrolyte film 13.

In some embodiments, the size of the composite solid-state electrolyte films 13 is greater than the size of the cathode sheets 11 and the anode sheets 12, to ensure that the cathode sheets 11do not directly contact the anode sheets 12 and to provide structural protection to the cathode sheets 11 and the anode sheets 12 by the composite solid-state electrolyte films 13. Therefore, the peripheral portions 13A of the composite solid-state electrolyte films 13 are laterally extended over the cathode sheets 11 and the anode sheets 12. However, due to electrical connection requirement, the cathode electrode tabs 11A of the cathode sheets 11 and the anode electrode tabs 12A of the anode sheets 12 are exposed at a side of the composite solid-state electrolyte films 13.

The cell stack 10 is further packaged, including performing a series of manufacturing processes using the apparatus for manufacturing the solid-state battery of the disclosure. The manufacturing processes include thermal pressing the cell stack 10, trimming the peripheral portions 13A of the composite solid-state electrolyte films 13, shaping the cathode sheets 11 and the anode sheets 12, and taping up the cell stack 10. As a result, a cell body to be disposed in a soft bag battery can be obtained.

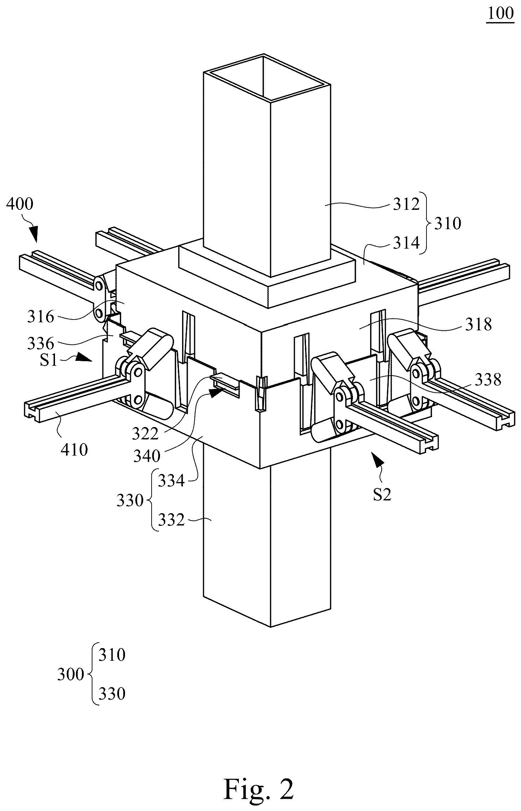

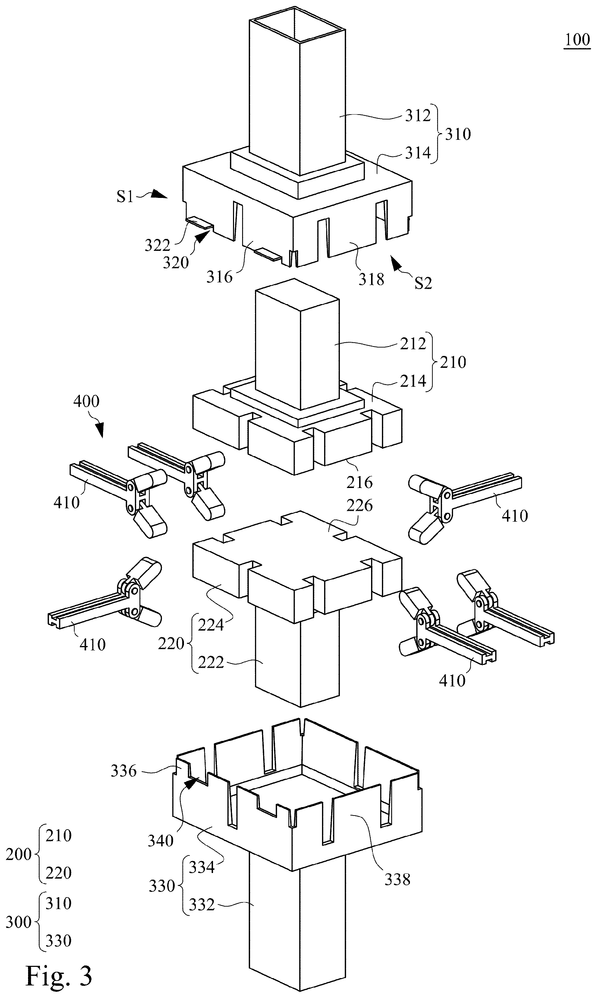

Reference is made to Fig. 1 to Fig. 3, in which Fig. 2 and Fig. 3 are an oblique view and an explosion view of the apparatus for manufacturing the solid-state battery according to some embodiments of the disclosure, respectively. The apparatus for manufacturing the solid-state battery 100 includes a clamping platform 200, a shaping unit 300 disposed surrounding the clamping platform 200, and a side-packaging unit 400.

The clamping platform 200 includes a top base 210 and a bottom base 220. The top base 210 and the bottom base 220 are opposite arranged to clamp the cell stack 10 therebetween. In some embodiments, the bottom base 220 is a fixed base, and a lifting mechanism (not shown) is coupled to the top base 210 so that the top base 210 is able to move up and down relative to the bottom base 220. In some embodiments, the lifting mechanism can be fluid cylinders, air cylinders, linkages, or the like.

For example, the top base 210 includes a lifting column 212 and a press head portion 214 connected to the lifting column 212. The lifting column 212 is coupled to the lifting mechanism. The press head portion 214 has a pressing surface 216 facing the bottom base 220. The bottom base 220 includes a base pillar 222 and a supporting portion 224 connected to the base pillar 222. The supporting portion 224 has a contact surface 226 facing the top base 210. The cell stack 10 is clamped between the pressing surface 216 and the contact surface 226, and is pressed and secured by the top base 210 and the bottom base 220.

The shaping unit 300 includes an upper shaping mechanism 310 and a bottom shaping mechanism 330. The upper shaping mechanism 310 is disposed surrounding the top base 210, and the bottom shaping mechanism 330 is disposed surrounding the bottom base 220. In some embodiments, the upper shaping mechanism 310 and the bottom shaping mechanism 330 are coupled to additional lifting mechanisms, respectively, so that the upper shaping mechanism 310 and the bottom shaping mechanism 330 are able to move up and down relative to the bottom base 220, respectively.

For example, the upper shaping mechanism 310 includes an upper lifting column 312 wrapping the lifting column 212 and a trimming component 314 connected to the upper lifting column 312. The bottom shaping mechanism 330 includes a bottom lifting column 332 wrapping the base pillar 222 and a fixing component 334 connected to the bottom lifting column 332. The inner diameter of the fixing component 334 is greater than the inner diameter of the trimming component 314.

When the cell stack 10 is secured between the top base 210 and the bottom base 220, the upper shaping mechanism 310 is pressed down to trim the peripheral portions 13A of the composite solid-state electrolyte films 13, and the bottom shaping mechanism 330 is lifted up to fix the peripheral portions 13A of the composite solid-state electrolyte films 13. The cathode electrode tabs 11A of the cathode sheets 11 and the anode electrode tabs 12A of the anode sheets 12 are also shaped by pressing down the upper shaping mechanism 310 and lifting up the bottom shaping mechanism 330.

In response to different shaping requirements of the cell stack 10 at electrode tab side S1 and non-electrode tab side S2, the shaping unit 300 also has corresponding structural designs at the electrode tab side S1 and the non-electrode tab side S2. The trimming component 314 includes a plurality of first trimming plates 316 at the electrode tab side S1 and a plurality of second trimming plates 318 at the non-electrode tab side S2. The structure of the first trimming plates 316 is different from the structure of the second trimming plates 318. The fixing component 334 includes a plurality of first fixing plates 336 at the electrode tab side S1 and a plurality of second fixing plates 338 at the non-electrode tab side S2. The structure of the first fixing plates 336 is different from the structure of the second fixing plates 338.

For example, the first trimming plates 316 and the second trimming plates 318 are wedge plates having taper. The thicknesses of the first trimming plates 316 and the second trimming plates 318 are gradually reduced from top to bottom so that tips of the first trimming plates 316 and the second trimming plates 318 point to the bottom base 220. The main difference between the first trimming plates 316 and the second trimming plates 318 is that the trimming component 314 includes a plurality of upper slots 320 disposed below the first trimming plates 316 and a plurality of guide pins 322 laterally extended from the upper slots 320.

For example, the first fixing plates 336 and the second fixing plates 338 are wedge plates having taper. The thicknesses of the first fixing plates 336 and the second fixing plates 338 are gradually reduced from bottom to top so that tips of the first fixing plates 336 and the second fixing plates 338 point to the top base 210. The main difference between the first fixing plates 336 and the second fixing plates 338 is that the fixing component 334 includes a plurality of lower slots 340 disposed above the first fixing plates 336. The upper slots 320 and the lower slots 340 together form accommodating spaces for the cathode electrode tab 11A and the anode electrode tab 12A.

The side-packaging unit 400 includes a plurality of taping clamps 410. The taping clamps 410 are laterally disposed and surround the clamping platform 200. The taping clamps 410 are configured to adhere tapes at the predetermined position at the side surfaces of the cell stack 10 to fasten the peripheral portions 13A of the composite solid-state electrolyte films 13 thereby completing the packaging of the cell stack 10.

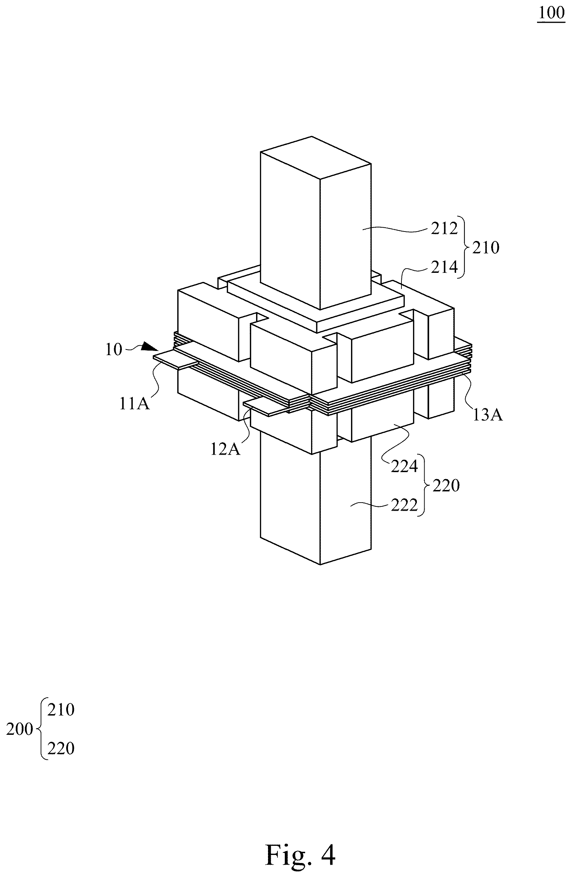

Reference is made to Fig. 4, which is an oblique view of a manufacturing stage of the apparatus for manufacturing the solid-state battery according to some embodiments of the disclosure. The cell stack 10 is placed into the clamping platform 200, including placing the cell stack 10 on the bottom base 220 and the pressing down the top base 210 so that the cell stack 10 is secured between the top base 210 and the bottom base 220.

In some embodiments, the clamping platform 200 not only secures the cell stack 10 but also heat presses the cell stack 10. Namely, the top base 210 and the bottom base 220 respectively have a heating element, and the cell stack 10 is heated and pressed when the top base 210 is pressed down to the cell stack 10.

Because the composite solid-state electrolyte films 13 (as shown in Fig. 1) includes polymer, and the polymer becomes flexible and has adhesive and thermoplastic after being heated, the cathode sheets 11 (as shown in Fig. 1) and the anode sheets 12 (as shown in Fig. 1) can be bonded by the composite solid-state electrolyte films 13, and the composite solid-state electrolyte films 13 are conformally applied on the cathode sheets 11 and the anode sheets 12. The cathode sheets 11, the anode sheets 12, and the composite solid-state electrolyte films 13 can be bonded firmly without damaging the active materials on the cathode sheets 11 and the anode sheets 12.

The peripheral portions 13A of the composite solid-state electrolyte films 13, the cathode electrode tabs 11A, and the anode electrode tabs 12A are extended beyond the clamping platform 200 and are not heat pressed by the clamping platform 200. The flexibility of the peripheral portions 13A of the composite solid-state electrolyte films 13, the cathode electrode tabs 11A, and the anode electrode tabs 12A are remained, so that the deformation thereof in the following manufacturing processes can be made successfully, and the situation of the peripheral portions 13A of the composite solid-state electrolyte films 13, the cathode electrode tabs 11A, and the anode electrode tabs 12A being destroyed due to stress concentration can be prevented.

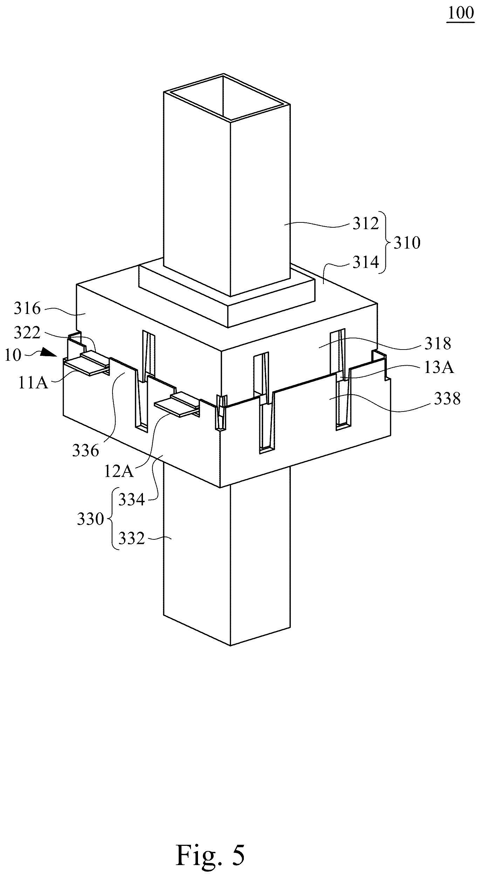

Reference is now made to Fig. 5, Fig. 6, and Fig. 7, which respectively are an oblique view, a cross-sectional view, and a partial view of another manufacturing stage of the apparatus for manufacturing the solid-state battery according to some embodiments of the disclosure. Following the heat pressing stage of Fig. 4, the upper shaping mechanism 310 is pressed down, and the bottom shaping mechanism 330 is lifted up to trim and fix the peripheral portions 13A of the composite solid-state electrolyte films 13 and to shape the cathode electrode tabs 11A of the cathode sheets 11 and the anode electrode tabs 12A of the anode sheets 12.

In some embodiments, by reasonably designing the taper angles of the upper shaping mechanism 310 and the bottom shaping mechanism 330 and the moving speed of the upper shaping mechanism 310 and the bottom shaping mechanism 330, the sequence of the moving the upper shaping mechanism 310 and the bottom shaping mechanism 330 can be simultaneously, lifting up followed by pressing down, or pressing down followed by lifting up.

In some embodiments, the bottom shaping mechanism 330 is lifted up and then the upper shaping mechanism 310 is pressed down. The upper edges of the first fixing plates 336 are in contact with the peripheral portions 13A of the composite solid-state electrolyte films 13 during the process of vertically lifting up the bottom shaping mechanism 330. The first fixing plates 336 and the second fixing plates 338 of the fixing component 334 having taper are moved against the peripheral portions 13A of the composite solid-state electrolyte films 13, so that the peripheral portions 13A of the composite solid-state electrolyte films 13 are therefore flipped upwards along the first fixing plates 336 and the second fixing plates 338 having taper.

Then, the upper shaping mechanism 310 is vertically pressed down. The lower edges of the first trimming plates 316 of the trimming component 314 are in contact with the peripheral portions 13A of the composite solid-state electrolyte films 13, so that the peripheral portions 13A of the composite solid-state electrolyte films 13 are bent downwards along the first trimming plates 316 having taper.

The cathode electrode tabs 11A and the anode electrode tabs 12A are contained in the accommodating spaces formed by the upper slots 320 (as shown in Fig. 3) and the lower slots 340 (as shown in Fig. 3). The guide pins 322 that laterally extend from the lower edge of the first trimming plates 316 touch the cathode electrode tabs 11A and the anode electrode tabs 12A, so that the cathode electrode tabs 11A and the anode electrode tabs 12A are also laterally extended.

The lower edges of the second trimming plates 318 of the trimming component 314 are in contact with the peripheral portions 13A of the composite solid-state electrolyte films 13 so that the peripheral portions 13A of the composite solid-state electrolyte films 13 are bent downwards along the second trimming plates 318 having taper.

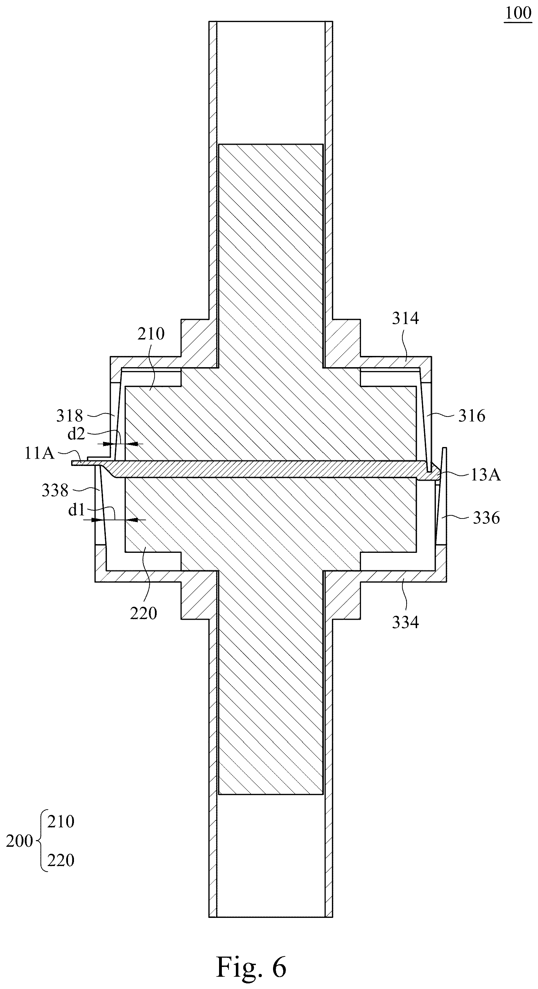

In some embodiments, as shown in Fig. 6, the distance d1 from the first fixing plates 336 and the second fixing plates 338 to the clamping platform 200 is greater than the distance d2 from the first trimming plates 316 and the second trimming plates 318 to the clamping platform 200. Thus the space for flipping and bending the peripheral portions 13A of the composite solid-state electrolyte films 13 is restricted between the first fixing plates 336, the second fixing plates 338, and the clamping platform 200.

Additionally, during fixing the peripheral portions 13A of the composite solid-state electrolyte films 13, the upper edges of the first fixing plates 336 and the second fixing plates 338 are higher than the top surface of the bottom base 220 to provide sufficient tolerance of flipping the peripheral portions 13A of the composite solid-state electrolyte films 13.

In some embodiments, during trimming the peripheral portions 13A of the composite solid-state electrolyte films 13, the lower edges of the first trimming plates 316 and the second trimming plates 318 are between the top surface of the bottom base 220 and the bottom surface of the top base 210 to maintain the evenness of the cell stack 10 and to prevent the peripheral portions 13A of the composite solid-state electrolyte films 13 from being over bent.

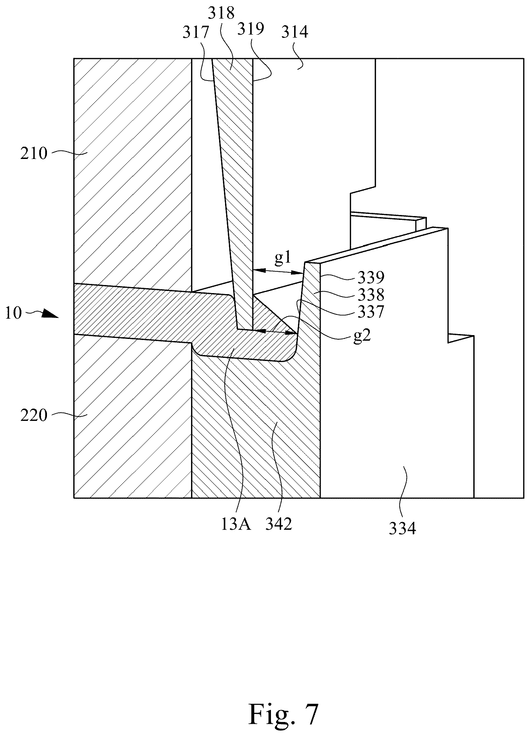

Optionally, as shown in Fig. 7, in some embodiments, the fixing component further includes a holding portion 342 disposed at the inner side of the first fixing plates 336 and the second fixing plates 338, and a height of the holding portion 342 is less than a height of the first fixing plates 336 and the second fixing plates 338. The holding portion 342 is configured to hold the peripheral portions 13A of the composite solid-state electrolyte films 13, such that the unwanted deformation of the peripheral portions 13A of the composite solid-state electrolyte films 13 during the trimming and fixing processes can be prevented.

In some embodiments, as shown in Fig. 7, take the second trimming plates 318 and the second fixing plates 338 for example, the second trimming plates 318 and the second fixing plates 338 are wedge plates having taper, and the taper and/or incline angle of the second trimming plates 318 is different from the taper and/or incline angle of the second fixing plates 338.

For example, the second trimming plates 318 are inclined outward from the top base 210. Each of the second trimming plates 318 has an inner surface 317 and an outer surface 319 opposite to each other. The incline angle of the inner surface 317 is greater than the incline angle of the outer surface 319. Therefore, the lower edge of each of the second trimming plates 318 is more away from the top base 210, comparing to the upper edge each of the second trimming plates 318.

The second fixing plates 338 are inclined outward from the bottom base 220. Each of the second fixing plates 338 has an inner surface 337 and an outer surface 339 opposite to each other. The incline angle of the inner surface 337 is greater than the incline angle of the outer surface 339. Therefore, the upper edge of each of the second fixing plates 338 is more away from the bottom base 220, comparing to the lower edge each of the second fixing plates 338.

The inner surface 337 of each of the second fixing plates 338 can be parallel to or not parallel to the outer surface 319 of each of the second trimming plates 318. In some embodiments, the inner surface 337 of each of the second fixing plates 338 is not parallel to the outer surface 319 of each of the second trimming plates 318, and the gap g1 between the upper edge of each of the second fixing plate 338 and each of the second trimming plates318 is greater than the gap g2 between the lower edge of each of the second trimming plates318 and each of the second fixing plate 338, to release the stress generated by bending the peripheral portions 13A of the composite solid-state electrolyte films 13.

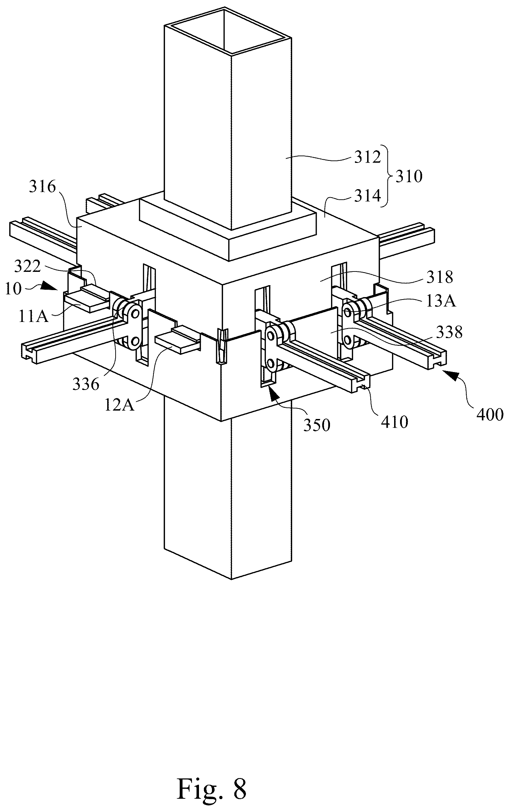

Reference is made to Fig. 8, which is an oblique view of another manufacturing stage of the apparatus for manufacturing the solid-state battery according to some embodiments of the disclosure. After the cell stack 10 (as show in Fig. 6) is secured by the clamping platform 200 (as shown in Fig. 6) and the peripheral portions 13A of the composite solid-state electrolyte films 13 (as shown in Fig. 1), along with the cathode electrode tabs 11A or the anode electrode tabs 12A are shaped by the shaping unit 300, the shaping unit 300 remains against the peripheral portions 13A of the composite solid-state electrolyte films 13, along with the cathode electrode tabs 11A and the anode electrode tabs 12A. Portions of the peripheral portions 13A of the composite solid-state electrolyte films 13 are exposed from the openings 350 of the shaping unit 300. For example, portions of the peripheral portions 13A of the composite solid-state electrolyte films 13 are exposed through the openings 350 between the first trimming plates 316, the first fixing plates 336, the second trimming plates 318, and the second fixing plate 338.

Then the tapes are adhered on the sides of the cell stack 10 by using the taping clamps 410. For example, the taping clamps 410 are disposed surrounding the clamping platform 200 to adhere the tapes to the predetermined positions on the sides of the cell stack 10. The tapes that are cut to predetermined lengths are provided to the taping clamps 410 from a tape wheel, and the taping clamps 410 insert into the openings 350 to adhere the tapes on the sides of the cell stack 10. The peripheral portions 13A of the composite solid-state electrolyte films 13 are folded and fastened at the sides of the cell stack 10 by the tapes.

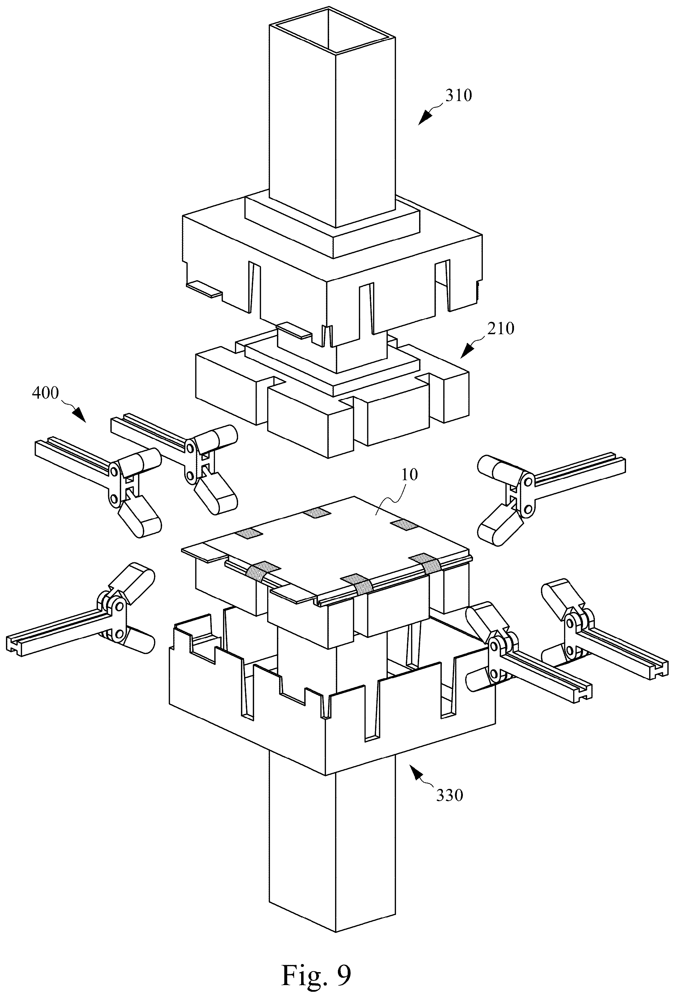

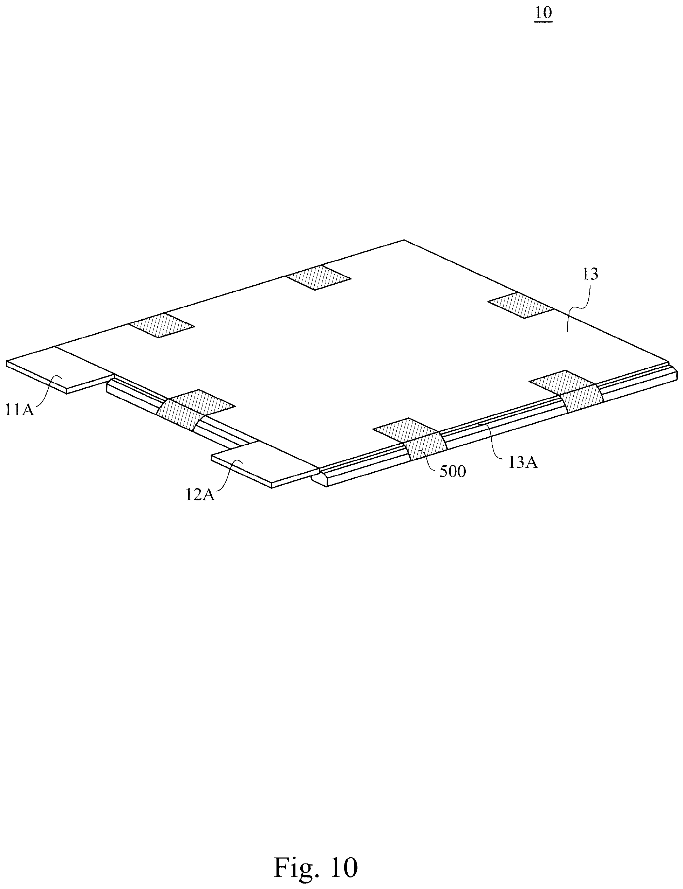

Finally, reference is made to Fig. 9, which is an oblique view of another manufacturing stage of the apparatus for manufacturing the solid-state battery according to some embodiments of the disclosure. The side-packaging unit 400 is detached from the cell stack 10, the upper shaping mechanism 310 is lifted up, the lower shaping mechanism 330 is pressed down, and the top base 210 is lifted up. Then the cell stack 10 is revealed and is ready to be picked up, as shown in Fig. 10.

Reference is made to Fig. 10, which is an oblique view of the cell stack after being packaged by the apparatus for manufacturing the solid-state battery according to some embodiments of the disclosure. The peripheral portions 13A of the composite solid-state electrolyte films 13 are folded twice, including trimming and fixing, and the peripheral portions 13A of the composite solid-state electrolyte films 13 are fastened by adhering the tapes 500. The peripheral portions 13A of the composite solid-state electrolyte films 13 include polymer layers and do not provide electrical function. Thus the protection ability at the side surfaces of the cell stack 10 can be improved by the thickened peripheral portions 13A of the composite solid-state electrolyte films 13.

The cathode electrode tabs 11A and the anode electrode tabs 12A are shaped and laterally extended from the cell stack 10. In some embodiments, the cathode electrode tabs 11A and the anode electrode tabs 12A are disposed at the same side of the cell stack 10 and are extended from the top surface of the cell stack 10. The packaged cell stack 10 can be utilized as a cell body in a soft bag (pocket) battery.

According to the embodiments of the disclosure, the apparatus for manufacturing the solid-state battery can reliable and efficiently package the cell stack as the battery, and the folded peripheral portions of the composite solid-state electrolyte films is thickened to improve the protection ability of the cell stack, thereby enhancing the battery safety of using the solid-state battery.

## Claims

1. An apparatus for manufacturing solid-state battery (100), **characterized by** comprising:
a clamping platform (200) comprising a bottom base (220) and a top base (210);
a shaping unit (300), comprising:
an upper shaping mechanism (310) disposed surrounding the top base (210) and comprising a trimming component (314) comprising a plurality of trimming plates (316, 318), wherein the trimming plates (316, 318) are wedge plates with taper; and
a lower shaping mechanism (320) disposed surrounding the bottom base (220) and comprising a fixing component (334) comprising a plurality of fixing plates (336, 338), wherein the fixing plates (336, 338) are wedge plates with taper, wherein an inner dimension of the fixing component (334) is greater than an inner dimension of the trimming component (314); and
a side-package unit (400) comprising a plurality of taping clamps (410) disposed laterally surrounding the shaping unit (300).

2. The apparatus for manufacturing solid-state battery (100) of claim 1, **characterized in that** the trimming plates (316, 318) comprise a plurality of first trimming plates (316) disposed at an electrode tab side (S1) of the shaping unit (300), and the trimming component (314) comprises a plurality of upper slots (320) disposed below the first trimming plates (316).

3. The apparatus for manufacturing solid-state battery (100) of any one of previous claims, **characterized in that** the trimming component (314) comprises a plurality of guide pins (322) laterally extended from the upper slots (320).

4. The apparatus for manufacturing solid-state battery (100) of any one of previous claims, **characterized in that** the fixing plates (336, 338) comprise a plurality of first fixing plates (336) disposed at an electrode tab side (S1) of the shaping unit (300), and the fixing component (334) comprises a plurality of lower slots (340) disposed above the first fixing plates (336).

5. The apparatus for manufacturing solid-state battery (100) of any one of previous claims, **characterized in that** an upper edge of the fixing plates (336, 338) is higher than a top surface of the bottom base (220).

6. The apparatus for manufacturing solid-state battery (100) of any one of previous claims, **characterized in that** a lower edge of the trimming plates (316, 318) is between a top surface of the bottom base (220) and a bottom surface of the top base (210).

7. The apparatus for manufacturing solid-state battery (100) of any one of previous claims, **characterized in that** the fixing component (334) comprises a holding portion (342) disposed at an inner side of the fixing plates (336, 338), and a height of the holding portion (342) is less than a height of the fixing plates (336, 338).

8. The apparatus for manufacturing solid-state battery (100) of any one of previous claims, **characterized in that** a taper of an inner surface of each of the trimming plates (316, 318) is greater than a taper of an outer surface of each of the trimming plates (316, 318).

9. The apparatus for manufacturing solid-state battery (100) of any one of previous claims, **characterized in that** a taper of an inner surface of each of the fixing plates (336, 338) is greater than a taper of an outer surface of each of the fixing plates (336, 338).

10. The apparatus for manufacturing solid-state battery (100) of any one of previous claims, **characterized in that** a gap (g1) between an upper edge of the fixing plates (336, 338) and the trimming plates (316, 318) is greater than a gap (g2) between a lower edge of the trimming plates (316, 318) and the fixing plates (336, 338).

11. The apparatus for manufacturing solid-state battery (100) of any one of previous claims, **characterized in that** the shaping unit (300) comprises a plurality of openings (350), and the taping clamps (410) are disposed corresponding to the openings (350).

12. A method of packing a solid-state battery, **characterized by** comprising:
providing a cell stack (10) comprising a plurality of cathode sheets (11), a plurality of anode sheets (12), and a plurality of composite solid-state electrolyte films (13);
securing the cell stack (10) in a clamping platform (200) of an apparatus for manufacturing a solid-state battery (100);
lifting up a lower shaping mechanism (320) to fix a plurality of peripheral portions (13A) of the composite solid-state electrolyte films (13);
pressing down an upper shaping mechanism (310) to trim the peripheral portions (13A) of the composite solid-state electrolyte films (13); and
adhering a plurality of tapes (500) on sides of the cell stack (10), after the peripheral portions (13A) of the composite solid-state electrolyte films (13) are trimmed and fixed.

13. The method of claim 12, **characterized in that** lifting up the lower shaping mechanism (320) to fix the peripheral portions (13A) of the composite solid-state electrolyte films (13) comprises moving a plurality of fixing plates (336, 338) against the peripheral portions (13A) of the composite solid-state electrolyte films (13) so that the peripheral portions (13A) of the composite solid-state electrolyte films (13) are flipped upwards along the fixing plates (336, 338).

14. The method of any one of claims 12-13, **characterized in that** pressing down the upper shaping mechanism (310) to trim the peripheral portions (13A) of the composite solid-state electrolyte films (13) comprises moving a plurality of trimming plates (316, 318) of the trimming component (314) to contact the peripheral portions (13A) of the composite solid-state electrolyte films (13), so that the peripheral portions (13A) of the composite solid-state electrolyte films (13) are bent downwards along the trimming plates (316, 318).

15. The method of any one of claims 12-14, **characterized in that** securing the cell stack (10) in the clamping platform (200) comprises heat pressing the cell stack (10) in the clamping platform (200).
